# EUROPEAN PATENT SPECIFICATION

(11) **EP 2 852 306 B1**
(45) Date of publication and mention of the grant of the patent: **18.11.2015**
(21) Application number: 13762262.7
(22) Date of filing: 05.07.2013
(51) Int. Cl.: A47J 27/04

(54) **DEVICE FOR STEAMING FOOD**
VORRICHTUNG ZUM GAREN VON LEBENSMITTELN
DISPOSITIF DE CUISSON À LA VAPEUR D'ALIMENT

(30) Priority: 19.07.2012 EP 12177092
(43) Date of publication of application: 01.04.2015
(73) Proprietor: Koninklijke Philips N.V., 5656 AE Eindhoven (NL)
(72) Inventor: PAAUW, Hendrik Klaas, NL-5656 AE Eindhoven (NL); DUINISVELD, Sebastiaan Johannes Nicolaas, NL-5656AE Eindhoven (NL); VAN ZUTPHEN, Martijn, NL-5656AE Eindhoven (NL)
(74) Representative: Coops, Peter
(86) International application number: PCT/IB2013/055503
(87) International publication number: WO 2014/013378

(56) References cited:
- US-A- 5 653 161
- US-B1- 6 196 115

## Description

### FIELD OF THE INVENTION

The present invention relates to a device for steaming food, comprising a base part and at least one basket which is intended to be positioned above the base part in a normal orientation of the device, wherein the at least one basket has a bottom provided with holes for letting through steam and a standing wall projecting from the bottom and delimiting a space above the bottom for receiving and containing food to be steamed, wherein the base part comprises a steam chamber for containing water to be converted into steam and heating means associated with the steam chamber for heating water which is inside the steam chamber, and wherein the device further comprises a tray for containing items for adding flavor and aroma to the food to be steamed, which has a bottom that is at least partially permeable to steam, and which is intended to be positioned below the at least one basket in the normal orientation of the device, in a path followed by the steam from the steam chamber to the basket during operation of the device.

### BACKGROUND OF THE INVENTION

A device for steaming food as defined in the foregoing is known, for example from US 5,653,161. In particular, US 5,653,161 discloses a steaming device comprising a drip tray in which a screen for supporting herbs, spices, or any other suitable type of food flavoring item is present in a tube which serves as steam outlet of the steam chamber of the device to the basket of the device. In this way, when herbs and spices are placed on the screen, indeed, it is achieved that they are incorporated in the steam as the food is being cooked, wherein the food can absorb the flavors throughout as they cook. The addition of herbs and spices allow a user of the steaming device to experiment with new flavors to enhance the taste of fresh vegetables and other food. By having the herbs and spices on a screen and thereby separating them from boiling water, cleaning of the reservoir and the steam chamber is facilitated, and build up of any unwanted residue at the heater is reduced. A problem associated with the use of the screen is that when a generous amount of flavoring items is present on the screen, it may occur that steam is produced faster than can be vented through the steam outlet. US 5,653,161 teaches that in order to solve this problem, the steaming device is equipped with pressure vents, so that excess pressure can vent therethrough. The vented steam is still used to cook the food, but merely has not been flavored by the flavoring items. In order words, the taste and the aroma of the food to be cooked are compromised for the purpose of avoiding situations of high pressure by using a by-pass of the steam outlet. As a result, the effectiveness of flavoring the food is significantly reduced.

For sake of completeness, it is noted that situations of high pressure should be avoided at all times. In the first place, such situations may lead to on/off switching of the steaming device due to the counter pressure in the steam outlet, which causes a reduction of steaming power available for the food to be steamed. Also, safety could be at stake, because the steam pressure will push hot water out of the steam chamber through every possible hole in the steaming device. In general, a situation in which an internal pressure inside a device is high is an unwanted situation as in extreme cases, the steam can force a way out by pushing away a weakest element of the device.

### SUMMARY OF THE INVENTION

In view of the above, it is an object of the present invention to provide a steaming device comprising a tray for containing items for adding flavor and aroma to the food to be steamed, which has a bottom that is at least partially permeable to steam, and which is intended to be positioned below the at least one basket in the normal orientation of the device, in a path followed by the steam from the steam chamber to the basket during operation of the device, as is the case in the steaming device known from US 5,653,161, wherein the problem of high pressure situations is solved in another way than by having a permanent bypass of the tray, so that flavoring items can be used to an optimal extent. The object is achieved by means of a steaming device in which the tray is loosely positioned on top of a steam outlet of the steam chamber to the at least one basket.

In the context of the present invention, it has been found that the tray for containing items for adding flavor and aroma to the food to be steamed, which will hereinafter be referred to as aroma infuser, can be arranged in the steaming device in such a way as to be used as a kind of valve. In particular, by choosing an arrangement in which the tray is loosely positioned on top of the steam outlet, a safety mechanism is realized according to which the aroma infuser is lifted when the pressure would build up too high. In a default position of the aroma infuser, all steam passes through the herbs and spices supported by the aroma infuser before it enters the at least one basket. Only in a lifted position of the aroma infuser, the steam is allowed to bypass the aroma infuser. In this way, optimal use of herbs and spices which are supported by the aroma infuser is guaranteed, as the times during which steam is allowed to bypass the aroma infuser are kept to a minimum. Hence, the tray is a separate component of the steaming device, which can be arranged for covering the complete steam outlet, while maximum flavor transfer is combined with a safe and high performance of the steaming device.

Within the framework of the present invention, it is possible that a kind of seating is present at a top side of the steam outlet, so that the aroma infuser can rest on the seating in the default position. Also, a resilient member can be used for exerting a spring force on the aroma infuser, which needs to be counteracted by the steam first before the aroma infuser can be lifted. Naturally, the spring force exerted by the resilient member should be low enough to avoid any risk of the pressure below the aroma infuser getting too high. Three factors determining a threshold force at which the aroma infuser can be lifted by the steam are the spring force as mentioned, the weight of the aroma infuser, and a friction force between the aroma infuser and the steam outlet, possibly the seating at the top side of the steam outlet. When the force which is defined as the cross-sectional area of the aroma infuser times the pressure exerted by the steam exceeds the sum of the weight of the aroma infuser, the friction force associated with the contact of the aroma infuser to the steam outlet, and the possible spring force, the aroma infuser is lifted from the steam outlet so that the pressure can decrease. As soon as the pressure of the steam decreases, the aroma infuser assumes a position at a lower level again. In general, the position of the aroma infuser is automatically adjusted, wherein a situation in which the steam can be higher than a threshold value which is associated with the threshold force as mentioned earlier cannot occur.

Another problem which is associated with the use of an aroma infuser resides in the fact that the effectiveness of the flavor transfer is reduced as soon as the herbs and spices get wet, which may easily occur in an environment where water and steam are present if no appropriate measures are taken. In particular, condensed steam can leak back from the at least one basket to the steam outlet, wherein the water passes the aroma infuser and wets the items carried by the aroma infuser. Also, when water leaks in the aroma infuser, it can happen that the aroma infuser gets more or less blocked, as a result of which the heating process of the food is disturbed. Besides the problems with the aroma infuser, there is a general problem associated with a situation in which water flows down from the at least one basket to the steam outlet. The general problem has to do with the fact that the water is not pure water, but water containing proteins, starches or the like due to the fact that the food to be steamed may have transferred substances into the water. When water containing proteins, starches or the like falls into the reservoir and the steam chamber, foaming occurs in the water which is present in the reservoir. As the foam bubbles carry water from the reservoir to the drip tray, the reservoir is emptied too fast and an oily mess is obtained in the reservoir. All in all, there is a need for a way of preventing water to flow back to the aroma infuser and the underlying steam outlet of the steam chamber.

According to the present invention, the problems as mentioned are solved by designing the bottom of the at least one basket with a dome-shaped area at a position for covering the aroma infuser with a concave side facing the aroma infuser. The radius of the dome can easily be chosen such as to be at least equal to the radius of the aroma infuser and the steam outlet. Water dripping on the dome-shaped area runs to the outer periphery of the dome-shaped area and exits the at least one basket at that position, wherein it is not possible for the water to fall into the aroma infuser and/or the steam outlet. Water which is present on a bottom side of the dome-shaped area runs to the outer periphery of the dome-shaped area by gravity and adhesive force between the water and the dome-shaped area.

Advantageously, holes for letting through steam are arranged in the dome-shaped area, so that a good steaming performance is ensured in all areas of the at least one basket, including the dome-shaped area. Preferably, in order to avoid droplets of water to fall through the holes and reaching the aroma infuser and/or the steam outlet after all, ribs are arranged at the bottom side of the dome-shaped area, wherein each rib extends between a hole and the outer periphery of the dome-shaped area. On the basis of the presence of the ribs, it is achieved that water dripping through the holes is guided to the outer periphery of the dome-shaped area under the influence of gravity and adhesive forces, so that when the water falls down from the at least one basket, it is not possible for the water to reach the aroma infuser and/or the steam outlet. In order to enhance the guiding function of the ribs, wherein the water does not fall down from the ribs until the outer periphery of the dome-shaped area has been reached, it is a practical option for the ribs to comprise two edges extending alongside each other, so that capillary forces play a role in keeping the water on the ribs as well, acting against gravity.

Another way in which the aroma infuser and the contents of the aroma infuser can get wet is under the influence of splashing of the boiling water in the steam chamber in the direction of the aroma infuser, through the steam outlet. This is solved by arranging some kind of shielding means in the steam outlet, which are adapted to prevent direct splashing, yet to allow steam to pass through. In a practical embodiment, the shielding means can be provided in the form of a unit comprising at least two layers with holes at mutually different positions as seen in a direction of the path followed by the steam from the steam chamber to the at least one basket during operation of the device. Due to the shifted position of the holes of the two layers, direct splashing is impossible, while steam is allowed to travel through the holes and pass the layers. A unit as mentioned can be made in plastic without a need for a difficult tool setup or separate parts.

The above-described and other aspects of the present invention will be apparent from and elucidated with reference to the following detailed description of a steaming device and various components of the steaming device.

### BRIEF DESCRIPTION OF THE DRAWINGS

The present invention will now be explained in greater detail with reference to the figures, in which equal or similar parts are indicated by the same reference signs, and in which:
Figure 1 shows an exploded view of a steaming device according to the present invention, wherein only one basket of the steaming device is shown;
Figure 2 shows a side view of the steaming device, wherein three baskets are shown;
Figure 3 shows a view of a longitudinal section of the steaming device, wherein only one basket is shown, and wherein furthermore an aroma infuser which is part of the device is shown;
Figure 4 diagrammatically shows an arrangement of the aroma infuser at a top side of a steam outlet of the steam chamber to the basket, wherein flows of steam are indicated by means of arrows;
Figures 5 and 6 show two views of a bottom of the basket of the steaming device; and
Figures 7 and 8 diagrammatically show two variants of an anti-splashing unit which is arranged in the steam outlet of the steam chamber to the basket, wherein flows of water and steam are indicated by means of arrows.

### DETAILED DESCRIPTION OF EMBODIMENTS

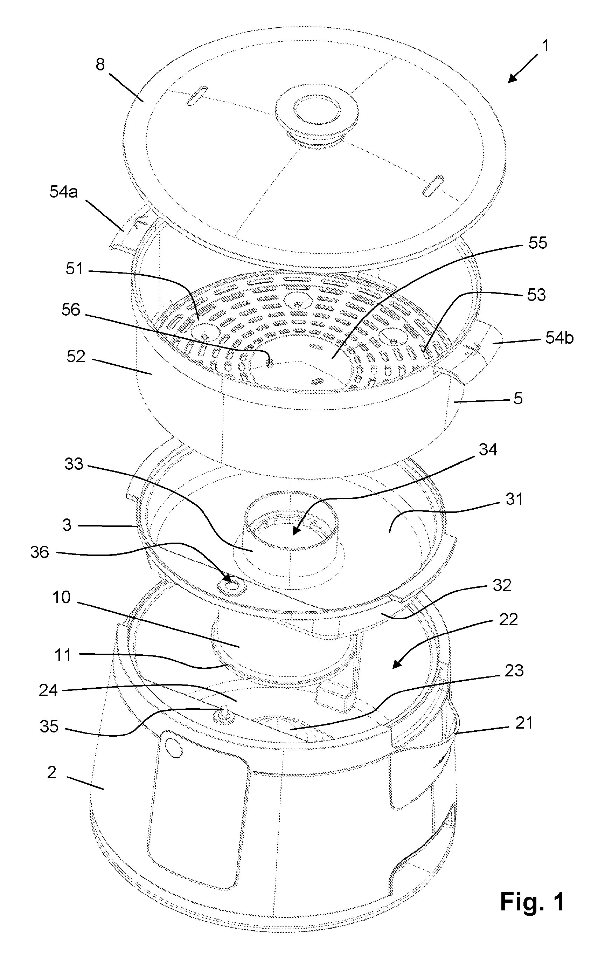

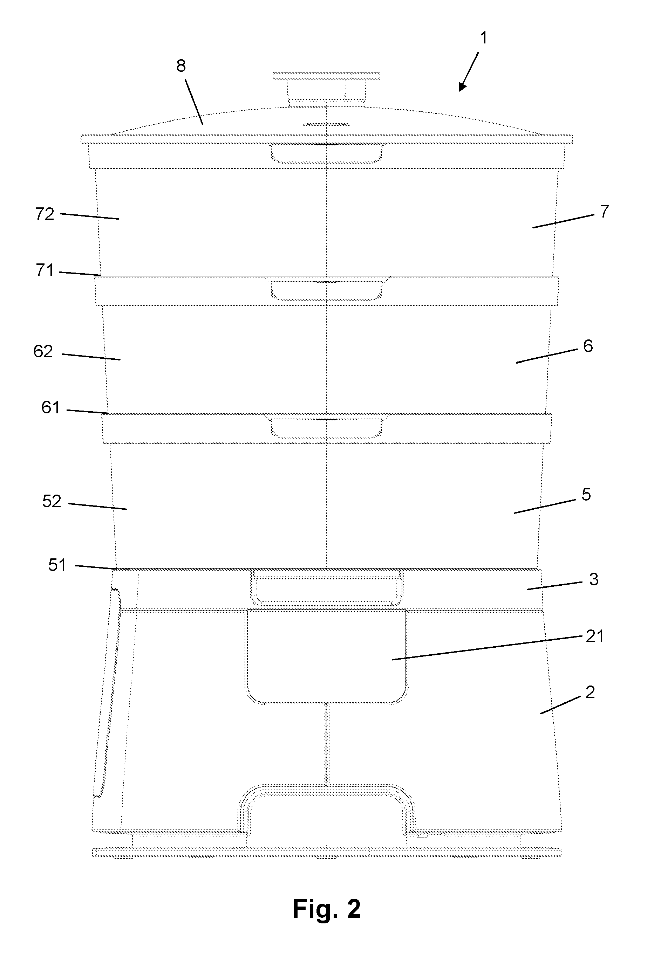

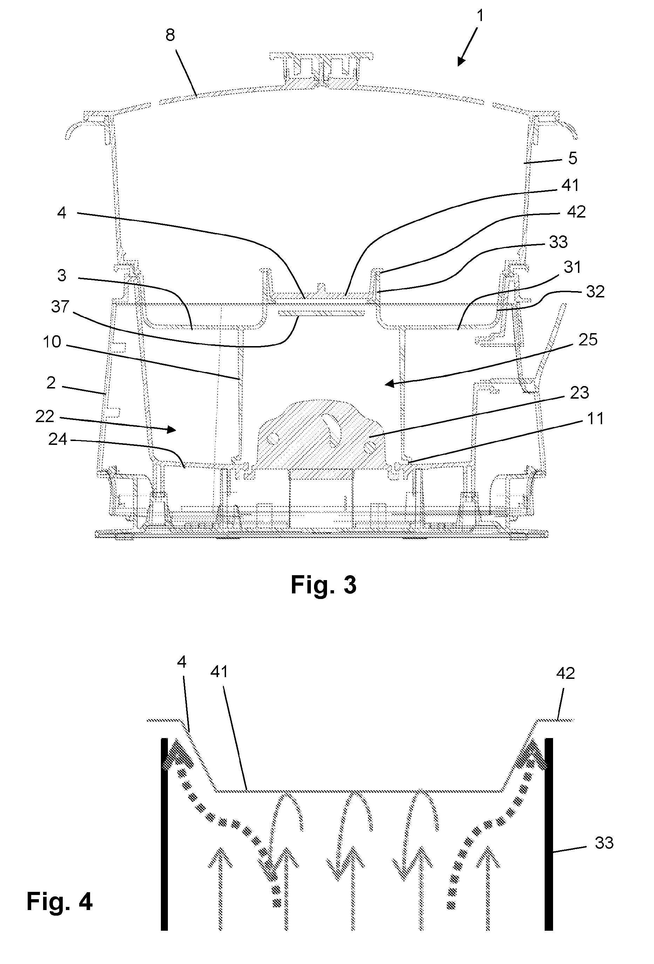

Figure 1 shows an exploded view of a steaming device 1 according to the present invention, figure 2 shows a side view of the steaming device 1, and figure 3 shows a view of a longitudinal section of the steaming device 1. In figures 1 and 3, only one basket 5 of the steaming device 1 is shown, while in figure 2, three baskets 5, 6, 7 are shown. The orientation of the steaming device 1 as shown in figure 2 is a normal orientation of the device 1. It is noted that in the following, when terms like "bottom" and "top" are used, this normal orientation of the device 1 is assumed. In particular, the normal orientation of the device 1 is an orientation in which a base part 2 of the device 1 is at a bottom side of the device 1, a drip tray 3 is placed on top of the base part 2, one or more baskets 5, 6, 7 are placed on top of the drip tray 3, and a cover 8 is placed on top of the basket(s) 5, 6, 7.

The steaming device 1 is intended to be used for cooking food by steaming the food. Types of food which can be prepared in this way include rice, fish, and vegetables like potatoes, broccoli, cauliflower, carrots, etc. Various types of food can be steamed at one time by using more than one basket 5, 6, 7 and/or having a partition baffle (not shown) in a basket 5, 6, 7 if so desired. A user of the steaming device 1 is free to decide how many baskets 5, 6, 7 should be used in a cooking process. Each of the baskets 5, 6, 7 comprises a bottom 51, 61, 71 for supporting the food and a standing wall 52, 62, 72 for delimiting a space above the bottom 51, 61, 71 for receiving and containing the food. The baskets 5, 6, 7 can be made in two parts, such that the bottom 51, 61, 71 can be detached from the standing wall 52, 62, 72, which involves good cleanability of the baskets 5, 6, 7, but this is not essential within the framework of the present invention.

In the following, for sake of clarity, it will be assumed that only one basket 5 is used in the steaming device 1, as shown in figures 1 and 3. Furthermore, characteristics of the baskets 5, 6, 7 will be described with reference to only one basket 5, wherein it is assumed that the baskets 5, 6, 7 are identical. It is emphasized that the number of baskets 5, 6, 7 which are provided with the steaming device 1 can be chosen freely within the framework of the present invention. Also, it is noted that if more than one basket 5, 6, 7 are available, the baskets 5, 6, 7 do not necessarily need to be identical, although it is convenient to a user of the steaming device 1 if they are.

The bottom 51 of the basket 5 is provided with holes 53 for letting through steam in an upward direction. The periphery of the basket 5 can have any suitable shape, and the same is true in respect of the peripheries of the base part 2, the drip tray 3, and the cover 8. The peripheries of the components 2, 3, 5, 8 as mentioned are generally the same, so that when the components 2, 3, 5, 8 are stacked on top of each other, an entirety is obtained which is free from irregularities in its outer surface, except for some practical projections like grips 54a, 54b of the basket 5 and a filling port 21 of the base part 2. In the shown example, the peripheries of the base part 2, the drip tray 3, the basket 5 and the cover 8 are circular. Other suitable shapes of the peripheries include an oval shape, a square shape, and a rectangular shape. In the latter two cases, it is possible for corners of the components 2, 3, 5, 8 to have rounded corners.

The base part 2 comprises a space which serves as a reservoir 22 for receiving and containing water to be used in the production of steam during operation of the steaming device 1. At a central position inside the reservoir 22, a bulb-shaped heater 23 for supplying heat to the water is present. Electronic elements which are needed for operating and controlling the heater 23 are positioned underneath a bottom 24 of the reservoir 22. For the purpose of allowing a user of the steaming device 1 to fill the reservoir 22 with water in a convenient manner, the base part 2 comprises the filling port 21 as mentioned earlier.

Important functions of the drip tray 3 are receiving fluid from the basket 5 during operation of the steaming device 1 and closing an open top side of the reservoir 22. In general, the drip tray 3 is shaped like a tray having a closed bottom 31 and a standing wall 32 projecting from the bottom 31 and delimiting a space above the bottom 31 for receiving and containing the fluid dripping from the basket 5. The fluid may be water which is obtained as steam condenses, and also fluid from the food which is present in the basket 5. At a top side of the bottom 31, at a central position, the drip tray 3 is provided with a tube 33 projecting from the bottom 31 in an upward direction, which will hereinafter be referred to as steam outlet 33. At the position of the tube 33, a hole 34 is present in the otherwise closed bottom 31 for letting through steam in an upward direction.

Furthermore, at a bottom side of the bottom 31, at a central position, the drip tray 3 is provided with another tube 10, namely a tube 10 projecting from the bottom 31 in a downward direction, which will hereinafter be referred to as separation tube 10. A height of the separation tube 10 is chosen such that when the drip tray 3 is in place on the base part 2, a free end 11 of the separation tube 10 contacts the bottom 24 of the reservoir 22, wherein, in the shown example, the separation tube 10 has a function in supporting the drip tray 3 on the bottom 24 of the reservoir 22. Preferably, the separation tube 10 is an integral part of the drip tray 3, but that does not alter the fact that it is also possible for the separation tube 10 to be designed such as to be attachable to and detachable from the drip tray 3, or even to be a separate part.

The separation tube 10 defines a steam chamber 25 inside the reservoir 22 by separating a central part of the reservoir 22 from the rest of the reservoir 22. In particular, the separation tube 10 is designed such as to surround the heater 23, so that a relatively small space for containing water is formed around the heater 23 which serves as the steam chamber 25 during operation of the steaming device 1. It will be understood that continuously heating small quantities of water involves a more effective use of the heater 23 as compared to heating the entire content of the reservoir 22, wherein the steaming device 1 is capable of delivering steam much faster during a start-up phase. For the purpose of allowing water to flow from the reservoir 22 to the steam chamber 25, the free end 11 of the separation tube 10 is provided with notches (not shown).

The steaming device 1 comprises an aroma infuser 4 for containing items for adding flavor and aroma to the food to be steamed, as shown in figure 3. A user can place herbs and spices in the aroma infuser 4, which is generally shaped like a tray having a bottom 41 which is at least partially permeable to steam. The aroma infuser 4 is positioned on top of the drip tray 3, particularly on top of the steam outlet 33. In this way, it is achieved that all steam which is produced during operation of the steaming device 1 passes through the aroma infuser 4 and the contents of the aroma infuser 4 before it reaches the food to be steamed, so that the taste and the aroma of the food is directly influenced by the interaction of the steam with the contents of the aroma infuser.

The standing wall 52 of the basket 5 can be made of a transparent material, such as a transparent plastic, for allowing a user of the steaming device 1 to watch and check the contents of the basket 5 during a steaming process. In general, the drip tray 3, the aroma infuser 4, the basket 5 and the cover 8 can be made of a plastic. Also, a number of elements of the base part 2 can be made of a plastic. Particularly, the reservoir 22 can be delimited by plastic walls.

The way in which the steaming device 1 works will be explained in the following. Before switching on the steaming device 1, a user of the device 1 makes some preparations. In the first place, the user takes care that the reservoir 22 is filled with a fresh quantity of water or possibly another fluid which is suitable to be used for steaming food, wherein the user can pour the fluid into the reservoir 22 through the filling port 21. When the reservoir 22 is filled to a sufficient extent, the user puts the drip tray 3 in place. In the process, the steam chamber 25 is formed inside the reservoir 22 as the free end 11 of the separation tube 10 touches the bottom 24 of the reservoir 22 and separates a small quantity of the water from the rest of the water contained inside the reservoir 22. Furthermore, the user fills the aroma infuser 4 with herbs and/or spices and places the aroma infuser 4 on top of the steam outlet 33. Also, the user fills the basket 5 with food to be steamed and places the basket 5 on top of the drip tray 3. Finally, the user covers the basket 5 by means of the cover 8. For sake of completeness, it is noted that the use of the aroma infuser 4 is not necessary for proper operation of the steaming device 1, so that a user of the device 1 may decide to omit the aroma infuser 4 if there is no need for adding extra flavor to the food to be steamed.

When the preparations are done, the user switches on the steaming device 1 and provides input to a controlling unit of the steaming device 1 by means of a control panel (not shown) arranged on the base part 2. For example, the user sets a duration of the steaming process. According to another possibility, the user enters information regarding the type of food which is present inside the basket 5. When the controlling unit is programmed such as to automatically choose optimal parameters of a steaming process with the type of food, particularly successive phases which are a combination of a certain temperature and a certain period of time, there is no need for the user to think of setting parameters himself/herself, so that mistakes are avoided.

As soon as the steaming device 1 is switched on, electric power is supplied to the heater 23 and the temperature of the water surrounding the heater 23 in the steam chamber 25 rises until the water starts to boil and steam is produced. The steam exits the steam chamber 25 through the steam outlet 33, flows through the aroma infuser 4 and flows further to the basket 5 while carrying the flavor and the aroma of the contents of the aroma infuser 4. Inside the basket 5, the food is heated under the influence of interaction with the steam and is cooked as a result thereof. In the process, the flavor and the aroma carried by the steam are absorbed by the food. The steam automatically flows in an upward direction and eventually reaches the cover 8, passing through the holes 53 in the bottom 51 of the basket 5. The steam chamber 25 is continuously refilled with water flowing from the reservoir 22 under the influence of gravity, on the basis of the principle of communicating vessels, through the notches which are present at the end 11 of the separation tube 10 touching the bottom 24 of the reservoir 22.

Advantageously, the steaming device 1 comprises a circuit for controlling a power supply to the heater 23, wherein the circuit is capable of using input about actual conditions obtained from a temperature sensor 35. It is understood that such a way of controlling the power supply yields more accurate results of the temperature at which steaming processes are performed than when control would be performed without any feedback. It is preferred for the temperature sensor 35 to be arranged in the at least one basket 5 or right underneath the basket 5, at a position between the steam outlet 33 and an extension thereof and the standing wall 52 of the basket 5 and an extension thereof.

In the shown example, the temperature sensor 35 is arranged on the base part 2 of the steaming device 1, at a top side of the base part 2, at a position close to the periphery of the base part 2. The drip tray 3 is provided with a hole 36 for letting through the temperature sensor 35 when the drip tray 3 is put in place on the base part 2. In this way, it is achieved that during a steaming process, the temperature sensor 35 is present in the drip tray 3, wherein the position of the temperature sensor 35 is a position which is close to the bottom 51 of the basket 5.

With the temperature sensor 35 being present inside the steaming device 1, it is possible to accurately set a temperature or various temperature phases during a steaming process. Needless to say that it is advantageous for the steaming device 1 to be equipped with some kind of timer as well when it is desired that temperature phases are realized, wherein the timer may be programmable by a user. In this respect, it is noted that for many types of food, it is advantageous to realize fast heating of the food during a start-up phase, to subject the food to a temperature lower than 100°C during a second phase, and to have a higher temperature again during one or more subsequent phases.

During a steaming process, a pressure is prevailing inside the steam outlet 33 which is higher than ambient pressure. Especially when the aroma infuser 4 which is present on top of the steam outlet 33 is stuffed with items and thereby causes a blocking effect on the flow of steam, the pressure can rise to unacceptable values if no measures are taken for enlarging an area through which steam is allowed to escape. According to the present invention, it is possible to actually take such measures while avoiding an undesirable situation in which part of the steam is allowed to bypass the aroma infuser 4 at all times. In particular, according to the present invention, it is possible for the aroma infuser 4 to be a separate part of the steaming device 1 which is not fixed to the steam outlet 33, but which is loosely positioned on top of the steam outlet 33 instead.

Figure 4 diagrammatically shows a top part of the steam outlet 33 and the aroma infuser 4 as positioned on top of the steam outlet 33. Furthermore, flows of steam are indicated by means of arrows. A series of straight arrows represents the steam flowing upward in the steam outlet 33, and a series of curved arrows represents the steam being blocked on its way out of the steam outlet 33 by the aroma infuser 4. Figure 4 shows the aroma infuser 4 in a state in which it is lifted from the steam outlet 33 under the influence of the steam, wherein a ring-shaped gap is obtained between a top side of the steam outlet 33 and the aroma infuser 4 through which steam can escape, as indicated by two relatively thick arrows. Consequently, when a high pressure is prevailing inside the steam outlet 33, a situation is obtained in which the steam is allowed to escape from the steam outlet 33 so that the pressure can decrease again. Thus, the present invention provides a way of creating an escape of steam without allowing the steam to bypass the aroma infuser 4 under all circumstances. In fact, the steam is only allowed to freely escape from the steam outlet 33 in the very situations in which this is necessary for reducing the pressure to an acceptable level. In a practical embodiment, the aroma infuser 4 has a peripheral rim 42 which is suitable for supporting the aroma infuser 4 on the steam outlet 33 with minimum friction force, so that the steam is not hindered in lifting the aroma infuser 4 from the steam outlet 33 when the pressure gets higher than an acceptable value.

Besides a bypass of steam, another factor which could reduce the effectiveness of the use of the aroma infuser 4 is the fact that fluid drips down from the basket 5 during a steaming process. The reason is that such fluid may cause the contents of the aroma infuser 4 to get wet, as a result of which the process in which steam absorbs flavor and aroma from these contents may be disturbed. Also, the blocking influence of the aroma infuser 4 on the steam is enhanced when the contents of the aroma infuser 4 are wetted. In order to avoid such a situation, the present invention proposes measures which are aimed at keeping the fluid dripping down from the basket 5 away from the aroma infuser 4 without hindering an upward flow of steam. An additional advantage of such measure can be that fluid is also not allowed to enter the steam outlet 33, so that contamination of the water which present inside the steam chamber 25 and the reservoir 22 is avoided and foaming in the water as contained by the reservoir 22 cannot occur.

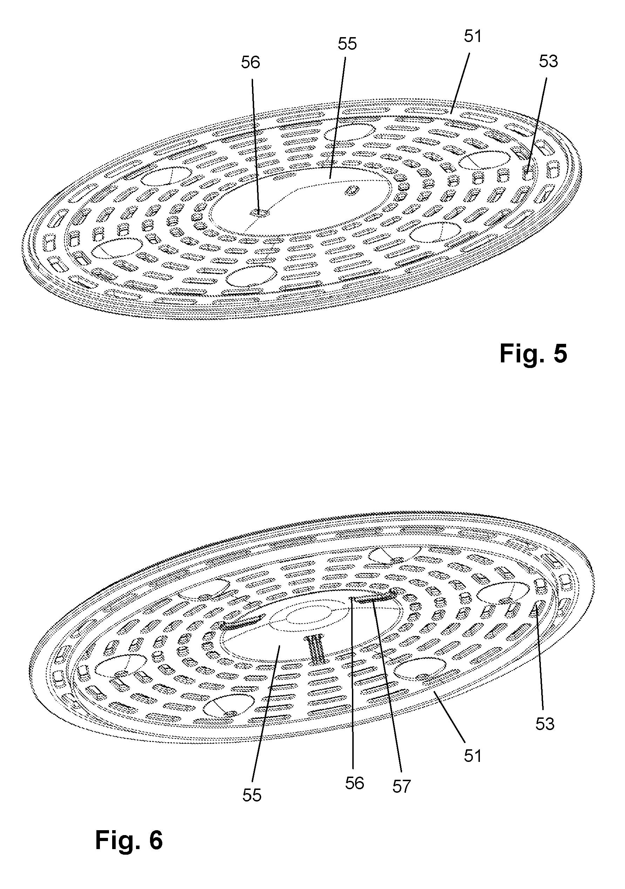

According to the present invention, the measure indicated in the preceding paragraph involves having a dome-shaped area 55 of the bottom 51 of the basket 5, as can be seen in the views of the bottom 51 as shown in figures 5 and 6. In particular, the dome-shaped area 55 is oriented such that a concave side of the area 55 is at a bottom side. Furthermore, the dome-shaped area 55 is large enough for covering the entire aroma infuser 4 and the underlying steam outlet 33. Any fluid on the dome-shaped area 55 will automatically flow to the periphery of the dome-shaped area 55 under the influence of gravity, as a result of which it is not possible for the fluid to reach the aroma infuser 4 or the steam outlet 33.

Advantageously, in order to avoid too much hindrance of the upward flow of steam, the dome-shaped area 55 is provided with a number of holes 56. In order to guide fluid which happens to be present at one of holes 56 to the periphery of the dome-shaped area 55, ribs 57 are provided, wherein each of the ribs 57 is associated with a hole 56 and extends from the hole 56 to the periphery of the dome-shaped area 55, at the bottom side of the area 55. On the basis of the presence of the ribs 57, fluid which is present at a hole 56 does not fall down through the hole 56, but is guided by the rib 57 extending from the hole under the influence of gravity and adhesive forces. The ribs 57 may comprise two edges extending alongside each other, whereby it can be achieved that the fluid is also held on the ribs 57 under the influence of another type of forces, namely capillary forces.

For sake of completeness, it is noted that when the steaming device 1 comes with more than one basket 5, 6, 7, it is preferred if at least a basket 5 which is intended to be placed directly on top of the drip tray 3 is provided with the dome-shaped area 55 of the bottom 51 as described in the foregoing. It is possible for the baskets 5, 6, 7 to be identical, wherein each of the baskets 5, 6, 7 has a dome-shaped area 55 in the bottom 51,61,71, but this is not necessary within the framework of the present invention.

Besides the possibility that the contents of the aroma infuser 4 get wet as a result of interaction with fluid at a top side of the aroma infuser 4, there is also a possibility that the contents get wet as a result of interaction with water splashing from the quantity of boiling water which is present in the steam chamber 25, through the steam outlet 33. In order to remove this possibility, the present invention proposes to have an anti-splashing unit 37 in the steam outlet 33, which is capable of blocking water splashing upward while allowing steam to pass at the same time.

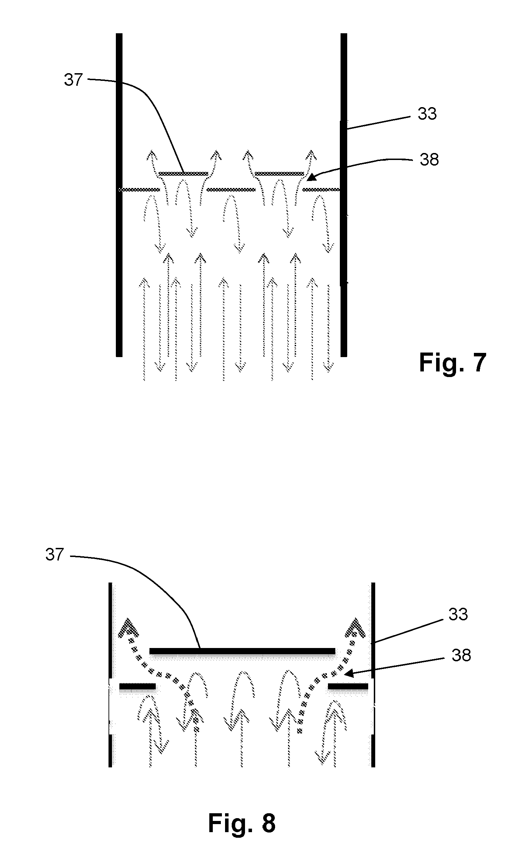

A first variant of an anti-splashing unit 37 as mentioned is diagrammatically shown in figure 7, and a second variant of the anti-splashing unit 37 is diagrammatically shown in figure 8, wherein flows of water and steam are indicated by means of arrows. In general, the anti-splashing unit 37 can be denoted as being a stepped maze with holes 38, wherein a few stepped horizontal layers block direct splashing, break bubbles of air and let steam through without letting water through as well. The anti-splashing unit 37 can be made in plastic without a need of having a difficult tool setup or loose parts. As indicated by the arrows in figures 7 and 8, when the anti-splashing unit 37 is present in the steam outlet 33, water moving upward and hitting the anti-splashing unit 37 is forced to move downward again. Even when the water passes a bottom layer of the anti-splashing unit 37, it will be blocked by a layer at a higher level. A flow of steam, however, is capable of finding a way through the holes 38 in the various layers. Hence, an effective way of preventing the aroma infuser 4 from becoming wet is realized. Furthermore, it is noted that application of an anti-splashing unit 37 also offers advantages when the aroma infuser 4 is not used during a steaming process, in view of the fact that without the anti-splashing unit 37 being present, the drip tray 3 would be filled to a maximum extent earlier as it would also be filled with water splashing through the steam outlet 33, resulting in an early water refill warning.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

It is noted that in this text, the terms "water" and "fluid" are used in respect of liquids which can be present in the steaming device 1. The use of these terms should not be understood such as to mean that the present invention is restricted to the use of a certain type of liquid. Particularly, the term "water" should be interpreted in a broad sense, not only in the meaning of pure water, but also in the meaning of water-based liquids.

In the example of a steaming device 1 according to the present invention shown in figure 2, the device 1 comprises three baskets 5, 6, 7 which are intended to be stacked on top of each other. That does not alter the fact that the number of baskets 5, 6, 7 can be chosen freely within the framework of the present invention, as mentioned earlier. Furthermore, when two or more baskets 5, 6, 7 are used, it is not necessary that the baskets 5, 6, 7 are intended to be positioned at different levels. In other words, in such a case, it is also possible for the baskets 5, 6, 7 to be intended to be positioned in a side-by-side configuration at one and the same level on the base part 2.

The baskets 5, 6, 7 can have any suitable shape as long as something like a bottom 51, 61, 71 for supporting food to be steamed and something like an upstanding wall 52, 62, 72 for retaining the food to be steamed on the bottom 51, 61, 71 are present. In a practical embodiment, the bottom 51, 61, 71 can be chosen such as to have a more or less flat appearance. The standing wall 52, 62, 72 can be shaped according to a circle or an ellipse, for example, or according to a square or a rectangle, whether provided with rounded corners, or not. In any case, it is advantageous for the shape of the standing wall 52, 62, 72 to be chosen such that a largest distance between the wall 52, 62, 72 and a geometric center axis of the basket 5, 6, 7 and a smallest distance between the wall 52, 62, 72 and the axis as mentioned do not deviate too much with respect to each other, i.e. are in a comparable order of magnitude, so that the basket 5, 6, 7 is free from projecting areas which are apt to remain at a lower temperature than more centrally positioned areas during a steaming process, or which would require the presence of heaters at various positions in the device steaming 1. For sake of completeness, it is noted that in a basket 5, 6, 7 having a flat bottom 51, 61, 71 and a standing wall 52, 62, 72 extending perpendicular with respect to the bottom 51, 61, 71 and having a symmetric shape, the geometric center axis is defined by the axis of symmetry of the standing wall 52, 62, 72 and extends as a straight line in an orientation which is parallel to the standing wall 52, 62, 72 and perpendicular to the bottom 51, 61, 71.

## Claims

1. Device (1) for steaming food, comprising a base part (2) and at least one basket (5, 6, 7) which is intended to be positioned above the base part (2) in a normal orientation of the device (1), wherein the at least one basket (5, 6, 7) has a bottom (51, 61, 71) provided with holes (53) for letting through steam and a standing wall (52, 62, 72) projecting from the bottom (51,61,71) and delimiting a space above the bottom (51,61,71) for receiving and containing food to be steamed, wherein the base part (2) comprises a steam chamber (25) for containing water to be converted into steam and heating means (23) associated with the steam chamber (25) for heating water which is inside the steam chamber (25), wherein the device (1) further comprises a tray (4) for containing items for adding flavor and aroma to the food to be steamed, which has a bottom (41) that is at least partially permeable to steam, and which is intended to be positioned below the at least one basket (5, 6, 7) in the normal orientation of the device (1), in a path followed by the steam from the steam chamber (25) to the basket (5, 6, 7) during operation of the device (1),
**characterized in that** said
tray (4) is loosely positioned on top of a steam outlet (33) of the steam chamber (25) to the basket (5, 6, 7).

2. Device (1) for steaming food according to claim 1, wherein the bottom (51, 61, 71) of the at least one basket (5, 6, 7) comprises a dome-shaped area (55) at a position for covering the tray (4) with a concave side facing the tray (4), and wherein holes (56) for letting through steam are arranged in the dome-shaped area (55).

3. Device (1) for steaming food according to claim 1, wherein a unit (37) comprising at least two layers with holes (38) at mutually different positions as seen in a direction of the path followed by the steam from the steam chamber (25) to the at least one basket (5, 6, 7) during operation of the device (1) is arranged in the steam outlet (33) of the steam chamber (25).

4. Device (1) for steaming food according to claim 2, wherein a unit (37) comprising at least two layers with holes (38) at mutually different positions as seen in a direction of the path followed by the steam from the steam chamber (25) to the at least one basket (5, 6, 7) during operation of the device (1) is arranged in the steam outlet (33) of the steam chamber (25).

## Patentansprüche

1. Vorrichtung (1) zum Dampfgaren von Lebensmitteln, umfassend ein Basisteil (2) und mindestens einen Korb (5, 6, 7), der oberhalb des Basisteils (2) in einer normalen Ausrichtung der Vorrichtung (1) zu positionieren ist, wobei der mindestens eine Korb (5, 6, 7) einen mit Löchern (53) versehenen Boden (51, 61, 71) zum Durchlassen von Dampf sowie eine von dem Boden (51, 61, 71) hervorragende und einen Raum oberhalb des Bodens (51, 61, 71) begrenzende, stehende Wand (52, 62, 72) zur Aufnahme und Unterbringung von zu garenden Lebensmitteln aufweist, wobei das Basisteil (2) eine Dampfkammer (25) zur Aufnahme von in Dampf umzuwandelndes Wasser sowie mit der Dampfkammer (25) verbundene Heizmittel (23) zur Erhitzung von sich innerhalb der Dampfkammer (25) befindendem Wasser umfasst, wobei die Vorrichtung (1) weiterhin eine Ablage (4) zur Aufnahme von Gegenständen zum Hinzufügen von Gewürzen und Aroma zu den zu garenden Lebensmitteln umfasst, die einen Boden (41) aufweist, der zumindest teilweise dampfdurchlässig ist, und die bei Betrieb der Vorrichtung (1) unterhalb des mindestens einen Korbes (5, 6, 7) in der normalen Ausrichtung der Vorrichtung (1), in einem Weg, gefolgt von dem Dampf von der Dampfkammer (25) zu dem Korb (5, 6, 7), zu positionieren ist,
**dadurch gekennzeichnet, dass** die Ablage (4) auf der Oberseite eines Dampfauslasses (33) der Dampfkammer (25) zu dem Korb (5, 6, 7) lose positioniert ist.

2. Vorrichtung (1) zum Dampfgaren von Lebensmitteln nach Anspruch 1, wobei der Boden (51, 61, 71) des mindestens einen Korbes (5, 6, 7) an einer Stelle einen kuppelförmigen Bereich (55) zur Abdeckung der Ablage (4) umfasst, wobei eine konkave Seite der Ablage (4) zugewandt ist, und wobei Löcher (56) zum Dampfdurchlass in dem kuppelförmigen Bereich (55) angeordnet sind.

3. Vorrichtung (1) zum Dampfgaren von Lebensmitteln nach Anspruch 1, wobei eine Einheit (37) mit mindestens zwei Schichten mit Löchern (38) an voneinander verschiedenen Stellen, gesehen in einer Richtung des Weges, dem während des Betriebs der Vorrichtung (1) der Dampf von der Dampfkammer (25) zu dem mindestens einen Korb (5, 6, 7) folgt, in dem Dampfauslass (33) der Dampfkammer (25) angeordnet ist.

4. Vorrichtung (1) zum Dampfgaren von Lebensmitteln nach Anspruch 2, wobei eine Einheit (37) mit mindestens zwei Schichten mit Löchern (38) an voneinander verschiedenen Stellen, gesehen in einer Richtung des Weges, dem während des Betriebs der Vorrichtung (1) der Dampf von der Dampfkammer (25) zu dem mindestens einen Korb (5, 6, 7) folgt, in dem Dampfauslass (33) der Dampfkammer (25) angeordnet ist.

## Revendications

1. Dispositif (1) de cuisson à la vapeur d'eau d'aliments, comprenant une partie de base (2) et au moins un panier (5, 6, 7) qui est destiné à être positionné au-dessus de la partie de base (2) dans une orientation normale du dispositif (1), dans lequel le au moins un panier (5, 6, 7) a un fond (51, 61, 71) pourvu de trous (53) pour laisser passer la vapeur d'eau et une paroi verticale (52, 62, 72) faisant saillie du fond (51, 61, 71) et délimitant un espace au-dessus du fond (51, 61, 71) pour recevoir et confiner les aliments à cuire à la vapeur d'eau, dans lequel la partie de base (2) comprend une chambre à vapeur d'eau (25) pour contenir l'eau à convertir en vapeur et des moyens de chauffage (23) associés à la chambre à vapeur d'eau (25) pour chauffer l'eau qui se trouver à l'intérieur de la chambre à vapeur d'eau (25), dans lequel le dispositif (1) comprend en outre un plateau (4) pour contenir des articles permettant d'ajouter des épices et des aromes aux aliments à cuire à la vapeur, qui a un fond (41) qui est au moins en partie perméable à la vapeur d'eau et qui est destiné à être disposé en dessous du au moins un panier (5, 6, 7) dans l'orientation normale du dispositif (1), dans un trajet suivi par la vapeur d'eau de la chambre à vapeur d'eau (25) au panier (5, 6, 7) au cours du fonctionnement du dispositif (1),
**caractérisé en ce que** ledit panier (4) est positionné de manière lâche au-dessus d'une sortie de vapeur d'eau (33) de la chambre à vapeur d'eau (25) jusqu'au panier (5, 6, 7).

2. Dispositif (1) de cuisson à la vapeur d'eau d'aliments selon la revendication 1, dans lequel le fond (51, 61, 71) du au moins un panier (5, 6, 7) comprend une zone en forme de dôme (55) dans une position permettant de recouvrir le plateau (4) par un côté concave tourné vers le plateau (4) et dans lequel des trous (56) permettant de laisser passer la vapeur d'eau sont ménagés dans la zone en forme de dôme (55).

3. Dispositif (1) de cuisson à la vapeur d'eau d'aliments selon la revendication 1, dans lequel une unité (37) comprenant au moins deux couches avec des trous (38) dans des positions mutuellement différentes lorsqu'on les observe dans la direction du trajet suivi par la vapeur d'eau de la chambre à vapeur d'eau (25) au au moins un panier (5, 6, 7) au cours du fonctionnement du dispositif (1) est aménagée dans la sortie de vapeur d'eau (33) de la chambre à vapeur d'eau (25).

4. Dispositif (1) de cuisson à la vapeur d'eau d'aliments selon la revendication 2, dans lequel une unité (37) comprenant au moins deux couches avec des trous (38) dans des positions mutuellement différentes lorsqu'on les observe dans la direction du trajet suivi par la vapeur d'eau de la chambre à vapeur d'eau (25) au au moins un panier (5, 6, 7) au cours du fonctionnement du dispositif (1) est aménagée dans la sortie de vapeur d'eau (33) de la chambre à vapeur d'eau (25).
